# EUROPÄISCHE PATENTSCHRIFT

(11) **EP 3 781 418 B1**
(45) Veröffentlichungstag und Bekanntmachung des Hinweises auf die Patenterteilung: **26.01.2022**
(21) Anmeldenummer: 19716817.2
(22) Anmeldetag: 28.03.2019
(51) Int. Cl.: B60G 7/00, B62D 7/16, B62D 7/18, B60B 35/00, F16C 11/06

(54) **RADTRÄGER FÜR EIN KRAFTFAHRZEUG**
WHEEL SUPPORT FOR A MOTOR VEHICLE
SUPPORT DE ROUE POUR UN VÉHICULE À MOTEUR

(30) Priorität: 19.04.2018 DE 102018205996
(43) Veröffentlichungstag der Anmeldung: 24.02.2021
(73) Patentinhaber: Audi AG, 85045 Ingolstadt (DE)
(72) Erfinder: BOSCH, Jakob, 88339 Bad Waldsee (DE)
(86) Internationale Anmeldenummer: PCT/EP2019/057875
(87) Internationale Veröffentlichungsnummer: WO 2019/201566

(56) Entgegenhaltungen:
- CN-A- 106 904 215
- CN-U- 2 108 665
- DE-A1-102005 011 135
- DE-A1-102005 011 135
- DE-A1-102011 007 831
- DE-A1-102013 214 719
- DE-T5-112009 001 768
- US-B1- 6 308 970

## Beschreibung

Die Erfindung betrifft einen Radträger für ein Kraftfahrzeug, mit einem Grundkörper und einem von dem Grundkörper ausgehenden Spurhebel zur Anbindung einer Spurstange über ein Spurstangengelenk, wobei das Spurstangengelenk auf einer Seite des Spurhebels mittels eines Bolzens an einer Anbindungsstelle an dem Spurhebel befestigt oder befestigbar ist. Die Erfindung betrifft weiterhin ein Verfahren zum Montieren eines Radträgers für ein Kraftfahrzeug.

Aus dem Stand der Technik ist beispielsweise die Druckschrift DE 40 17 210 C1 bekannt. Diese betrifft eine lenkbare Kraftfahrzeugachse, mit einem Drehstab-Stabilisator, dessen Drehstab aufbauseitig gehalten und dessen abgekröpfte Endstücke über jeweils eine gelenkige Verbindung am unteren Ende eines Verbindungsarmes befestigt sind, dessen oberes Ende in der Lenkachse des jeweiligen Rades an dessen Radträger angelenkt ist. Dabei ist vorgesehen, dass der Verbindungsarm bei einer Bewegung des Radträgers gleichsinnig mit diesem und gegen eine in der Verbindung des Drehstab-Stabilisators zum Verbindungsarm liegende, nachgiebige, rückstellende Abstützung um die Lenkachse verschwenkt wird.

Zudem beschreibt die Druckschrift CN 106 904 215 A ein Lenksystem und ein Automobil, wobei das Lenksystem einen Spurstangenkugelsitz, eine Spurstangenkugel, einen Achsschenkel, eine Spurstangenvorrichtung und eine Sicherheitsvorrichtung umfasst.

Die Druckschrift DE 11 2009 001 768 T5 zeigt ebenfalls ein Lenksystem für ein Fahrzeug, wobei das Lenksystem einen Achsschenkel, eine Spurstange und einen Abzieher mit einem Verbindungsstück, um den Achsschenkel und die Spurstange miteinander zu verbinden, wenn sich das Verbindungsstück in einer ausgestreckten Stellung befindet, umfasst.

Außerdem beschreibt die Druckschrift CN 2 108 665 U einen doppelköpfigen, doppelt hängenden Lenkkugelkopf, welcher so angeordnet ist, dass er einen oberen Kugelkopf und einen unteren Kugelkopf in dem vorhandenen Raum des Bodens von Fahrzeugen aufweist, und der obere Kugelkopf noch mit einem Achsschenkel verbunden ist, der mit dem unteren Kugelkopf hängend in dem Loch am Boden eines Sicherheitsrahmens installiert ist.

Es ist Aufgabe der Erfindung, einen Radträger für ein Kraftfahrzeug vorzuschlagen, welcher gegenüber bekannten Radträgern Vorteile aufweist, insbesondere eine zuverlässige und sichere Anbindung der Spurstange sicherstellt.

Dies wird erfindungsgemäß mit einem Radträger für ein Kraftfahrzeug mit den Merkmalen des Anspruchs 1 erreicht. Dabei ist vorgesehen, dass an dem Radträger ein die Anbindungsstelle übergreifender Haltevorsprung eine Verliersicherung für die Spurstange bildet.

Der Radträger dient der drehbaren Lagerung wenigstens eines Rads an einer Karosserie des Kraftfahrzeugs. Der Radträger ist dabei bevorzugt Bestandteil einer Radaufhängung, welche der Aufhängung, insbesondere der federnden Aufhängung, des Rads bezüglich der Karosserie dient. Das Rad ist an dem Radträger der Radlageranordnung drehbar gelagert. Hierzu ist das Rad vorzugsweise an einer Radnabe befestigbar, welche schlussendlich mittels eines Radlagers an dem Radträger drehbar gelagert ist. Der Radträger weist beispielsweise eine Radlageraufnahme auf, welche als Öffnung, insbesondere als randgeschlossene Öffnung, in dem Radträger beziehungsweise dessen Grundkörper ausgestaltet ist.

In der Radlageraufnahme ist das Radlager angeordnet. Zudem greift die Radnabe und/oder eine mit ihr drehfest gekoppelte Welle wenigstens bereichsweise in die Radlageraufnahme ein. Besonders bevorzugt durchgreifen die Radnabe und/oder die Welle, insbesondere gemeinsam, die Radlageraufnahme in axialer Richtung bezüglich einer Drehachse der Radnabe zumindest teilweise, insbesondere vollständig. Das Radlager liegt besonders bevorzugt als Wälzlager vor und verfügt hierzu über einen Innenring und einen Außenring, zwischen welchen zur Reibungsreduzierung Wälzkörper vorliegen.

Vorzugsweise ist der Innenring der Radnabe zugeordnet, insbesondere mit der Radnabe verbunden, beispielsweise ist er einstückig mit ihr ausgestaltet oder an ihr befestigt, wohingegen der Außenring dem Radträger zugeordnet ist, insbesondere mit dem Radträger verbunden ist, zum Beispiel an ihm befestigt ist. Dabei liegt der Außenring bevorzugt in der Radlageraufnahme vor. Anders ausgedrückt liegt der Außenring mit seiner Außenumfangsfläche an einer die Radlageraufnahme begrenzenden Innenumfangsfläche des Radträgers an.

Der Radträger ist bevorzugt über wenigstens einen Fahrwerklenker mit der Karosserie verbunden. Der Fahrwerklenker greift also einerseits an der Karosserie und andererseits an dem Radträger an, insbesondere jeweils schwenkbeweglich. Der Fahrwerklenker liegt beispielsweise in Form eines Querlenkers vor. Auch eine Ausgestaltung als Längslenker ist jedoch möglich. Grundsätzlich erfolgt die Anbindung des Radträgers über den wenigstens einen Fahrwerklenker. Bevorzugt sind jedoch mehrere Fahrwerklenker zur Anbindung des Radträgers an die Karosserie vorgesehen. Insbesondere liegt der Fahrwerklenker in Form eines Zweipunktlenkers, eines Dreiecklenkers oder dergleichen vor. Ist der Radträger über mehrere Fahrwerklenker angebunden, so kann jeder dieser Fahrwerklenker als Zweipunktlenker oder als Dreiecklenker ausgestaltet sein.

Der Radträger weist zumindest den Grundkörper und den Spurhebel auf, welcher in Form eines Vorsprungs von dem Grundkörper ausgeht. Der Grundkörper und der Spurhebel sind vorzugsweise einstückig und/oder materialeinheitlich ausgestaltet. Der Spurhebel dient zur Anlenkung beziehungsweise Anbindung der Spurstange, über welche eine Lenkbewegung auf den Radträger übertragen wird. Die Spurstange greift hierbei an der Anbindungsstelle an dem Spurhebel an, wobei die Anbindungsstelle beabstandet von einer Drehachse des Radträgers vorliegt, um welche der Radträger drehbar bezüglich der Karosserie gelagert ist. Auf diese Art und Weise wird ein Hebelweg erzeugt, aufgrund dessen eine lineare Bewegung der Spurstange in eine Drehbewegung des Radträgers umgesetzt wird.

Die Spurstange ist schwenkbeweglich an dem Spurhebel angelenkt, nämlich über das Spurstangengelenk. Das Spurstangengelenk liegt bezüglich einer Drehachse des Spurstangengelenks beziehungsweise einer Drehachse der Spurstange bezüglich des Spurhebels in axialer Richtung gesehen neben dem Spurhebel vor. In Einbaulage des Radträgers sind das Spurstangengelenk und mithin die Spurstange insoweit oberhalb oder unterhalb des Spurhebels angeordnet. Vorzugsweise weist die Spurstange ein Lagerelement auf, welches zur Ausbildung des Spurstangengelenks in ein Lagergehäuse eingreift, das an dem Spurhebel befestigt beziehungsweise befestigbar ist.

Die Befestigung des Spurstangengelenks beziehungsweise des Lagergehäuses erfolgt mittels des Bolzens, welcher eine in dem Spurhebel ausgebildete Ausnehmung hierzu zumindest teilweise durchgreift. Beispielsweise liegt das Spurstangengelenk beziehungsweise das Lagergehäuse in axialer Richtung bezüglich der Drehachse des Spurstangengelenks einerseits des Spurhebels und eine Mutter zur Befestigung des Spurstangengelenks an dem Spurhebel andererseits des Spurhebels vor. Der Bolzen durchgreift insoweit den Spurhebel in axialer Richtung vollständig. Das Spurstangengelenk ist auf der einen Seite des Spurhebels an der Anbindungsstelle an dem Spurhebel befestigt oder befestigbar. Hierunter ist zu verstehen, dass in axialer Richtung bezüglich einer Längsmittelachse des Bolzens gesehen, das Spurstangengelenk neben dem Spurhebel angeordnet ist, beispielsweise an dem Spurhebel anliegend oder in axialer Richtung von ihm beabstandet.

Beispielsweise im Falle einer Beschädigung des Spurstangengelenks kann es zu einem Lösen der Spurstange von dem Spurhebel kommen, beispielsweise durch ein Herausbewegen des Lagerelements aus dem Lagergehäuse. In diesem Fall wäre nachfolgend ein Lenken des Kraftfahrzeugs nicht mehr möglich. Aus diesem Grund ist die Verliersicherung für die Spurstange vorgesehen, welche durch den Haltevorsprung gebildet wird. Der Haltevorsprung übergreift die Anbindungsstelle derart, dass ein Entfernen der Spurstange von dem Spurhebel verhindert wird, insbesondere in axialer Richtung bezüglich der Drehachse des Spurstangengelenks. Beispielsweise verhindert also der Haltevorsprung effektiv ein Herausbewegen des Lagerelements aus dem Lagergehäuse.

Weil üblicherweise auch bei einer Beschädigung des Spurstangengelenks der Bolzen intakt ist, setzt er die Spurstange in radialer Richtung bezüglich der Drehachse des Spurstangengelenks an dem Spurhebel fest. Über den Bolzen kann insoweit weiterhin eine Kraft von der Spurstange auf den Spurhebel oder umgekehrt übertragen werden. Gleichzeitig verhindert der Haltevorsprung ein Entfernen der Spurstange von dem Bolzen. Beispielsweise umgreift die Spurstange den Bolzen in Umfangsrichtung bezüglich der Drehachse wenigstens teilweise, insbesondere vollständig. Hierdurch ist die Spurstange in radialer Richtung bezüglich der Drehachse an dem Bolzen festgesetzt, jedoch nicht in axialer Richtung. Insoweit könnte die Spurstange ohne die Verliersicherung von dem Bolzen herunterrutschen. Ein solches Herunterrutschen würde jedoch mithilfe des Haltevorsprungs, welche die Verliersicherung ausbildet, verhindert.

Besonders bevorzugt ist der Haltevorsprung derart angeordnet, dass er die Spurstange bezüglich des Spurhebels mit Spiel in axialer Richtung festsetzt. Somit wird zwar ein Entfernen der Spurstange von dem Spurhebel verhindert, gleichzeitig kann während eines Fahrbetriebs des Kraftfahrzeugs jedoch eine Bewegung der Spurstange bezüglich des Spurhebels in axialer Richtung auftreten. Eine solche Bewegung führt aufgrund eines Anschlagens der Spurstange an dem Spurhebel und/oder dem Haltevorsprung zu einer Geräuschbildung und/oder zu Vibrationen. Insoweit ist ein akustischer und/oder haptischer Indikator für einen Benutzer des Kraftfahrzeugs realisiert, welcher einen Defekt des Spurstangengelenks anzeigt. Der haptische Indikator ist insbesondere über ein Lenkrad des Kraftfahrzeugs von dem Benutzer erfühlbar. In anderen Worten lässt die Verliersicherung beziehungsweise der Haltevorsprung zwar eine Verlagerung der Spurstange bezüglich des Spurhebels in axialer Richtung zu, verhindert jedoch ein vollständiges Entfernen der Spurstange von dem Spurhebel. Insoweit wird ein Verlust einer Radführung zuverlässig verhindert.

Eine weitere Ausgestaltung der Erfindung sieht vor, dass der Haltevorsprung beabstandet von dem Spurhebel und/oder dem Grundkörper angeordnet ist. Der Haltevorsprung ist bezüglich des Grundkörpers und/oder des Spurhebels befestigt, jedoch zumindest von dem Spurhebel oder dem Grundkörper beabstandet angeordnet. Beispielsweise verläuft der Haltevorsprung parallel oder zumindest näherungsweise parallel zu dem Spurhebel. Eine gedachte Längsmittelachse des Haltevorsprungs verläuft also parallel zu einer gedachten Längsmittelachse des Spurhebels oder schließt mit dieser einen Winkel ein, welcher größer als 0° und kleiner als 90° ist. Vorzugsweise ist der Winkel größer als 0° und entspricht höchstens 5°, höchstens 4°, höchstens 3°, höchstens 2° oder höchstens 1°. Zusätzlich oder alternativ ist der Haltevorsprung beabstandet von dem Grundkörper angeordnet. Vorzugsweise ist er über ein zusätzliches Element an dem Grundkörper befestigt. Eine derartige Ausgestaltung ermöglicht eine einfache und zuverlässige Montage des Spurstangengelenks an dem Radträger.

Eine weitere bevorzugte Ausführungsform der Erfindung sieht vor, dass der Haltevorsprung lösbar befestigt ist. Hierunter ist zu verstehen, dass der Haltevorsprung beschädigungsfrei und reversibel an dem Grundkörper und/oder dem Spurhebel befestigt ist, also sowohl an diesem befestigt als auch von ihm beschädigungsfrei wieder gelöst werden kann. Hierdurch werden eine Montage und insbesondere ein Austausch des Spurstangengelenks deutlich vereinfacht.

Eine Weiterbildung der Erfindung sieht vor, dass der Haltevorsprung von dem Grundkörper oder einem Bügel ausgeht, der einerseits oder beidseitig an dem Grundkörper und/oder dem Spurhebel befestigt ist. Der Haltevorsprung kann also entweder unmittelbar an dem Grundkörper befestigt sein und insoweit von diesem ausgehen. In diesem Fall ist er bevorzugt von dem Spurhebel beabstandet angeordnet. Besonders bevorzugt ist jedoch eine Ausgestaltung, bei welcher der Haltevorsprung von dem Bügel ausgeht, der seinerseits an dem Grundkörper beziehungsweise dem Spurhebel befestigt ist. In anderen Worten ist der Haltevorsprung lediglich mittelbar mit dem Grundkörper beziehungsweise dem Spurhebel verbunden.

Es kann vorgesehen sein, dass der Bügel lediglich einseitig oder aber - bevorzugt - beidseitig an dem Grundkörper und/oder dem Spurhebel befestigt ist. Im Falle der einseitigen Befestigung ist vorzugsweise der Bügel lediglich an dem Spurhebel befestigt, wohingegen er von dem Grundkörper beabstandet angeordnet ist. Auch eine Ausgestaltung, bei welcher der Bügel unmittelbar an dem Grundkörper befestigt ist, also von diesem ausgeht, und von dem Spurhebel beabstandet ist, kann umgesetzt sein. Besonders bevorzugt ist der Bügel jedoch einerseits an dem Grundkörper und andererseits an dem Spurhebel befestigt. Hierdurch wird eine besonders hohe Steifigkeit des Bügels und des Radträgers erzielt. Die Befestigung des Bügels kann mittels einer Schraubbefestigung erfolgen, welche eine oder mehrere Schrauben umfasst.

Die Anordnung des Haltevorsprungs an dem Grundkörper ermöglicht eine besonders einfache Ausgestaltung des Radträgers, wohingegen die Anordnung an dem Bügel zusätzlich eine Unfallsicherheit des Kraftfahrzeugs erhöhen kann. In diesem Fall ist der Bügel vorzugsweise derart ausgestaltet, dass im Falle eines frontalen Aufpralls des Kraftfahrzeugs auf ein Hindernis mit geringer Überdeckung, einem sogenannten "small overlap", das Rad des Kraftfahrzeugs abgelenkt beziehungsweise abgestützt wird. Das Rad kann insoweit nicht nach innen eindrehen. Eine solche Ausgestaltung vereint eine hohe Unfallsicherheit des Kraftfahrzeugs mit der vorteilhaften Wirkung des Haltevorsprungs.

Im Rahmen einer weiteren bevorzugten Ausgestaltung der Erfindung kann vorgesehen sein, dass aufgrund der beidseitigen Befestigung des Bügels im Schnitt eine randgeschlossene Ausnehmung ausgebildet ist, die von dem Grundkörper, dem Spurhebel und dem Bügel gemeinsam begrenzt ist. Hierdurch wird mit geringem Materialeinsatz eine große effektive Abstützfläche für das Rad des Kraftfahrzeugs bereitgestellt, welches aufgrund seiner Erstreckung in dieselbe Richtung wie der Spurhebel einen großen Hebelarm zur Abstützung des Rads bereitstellt. Durch die beidseitige Befestigung des Bügels, welche hierzu sowohl an dem Grundkörper als auch an dem Spurhebel angreift, wird eine hohe Steifigkeit mit den damit einhergehenden Vorteilen im Falle eines Unfalls des Kraftfahrzeugs erzielt.

Eine besonders bevorzugte Weiterbildung der Erfindung sieht vor, dass der Spurhebel ein Lagerauge zur Anbindung des Spurstangengelenks aufweist, wobei der Bügel auf der dem Grundgelenk abgewandten Seite an dem Lagerauge befestigt ist. Das Lagerauge wird von einer Aufdickung des Spurhebels in wenigstens einer Richtung gebildet, in welcher eine Durchtrittsöffnung für den Bolzen ausgebildet ist. Das Lagerauge umgreift insoweit nach einer Montage des Spurstangengelenks an dem Spurhebel den Bolzen in Umfangsrichtung vollständig.

Der Bügel greift nun auf der dem Grundkörper abgewandten Seite an dem Lagerauge an. Er ist entsprechend unmittelbar an dem Lagerauge befestigt, beispielsweise mittels der bereits erwähnten Schraubverbindung. Das bedeutet, dass auf vorteilhafte Art und Weise der Spurhebel zur Beabstandung wenigstens eines Bereichs des Bügels von dem Grundkörper des Radträgers herangezogen wird. Es ist also kein separater Vorsprung an dem Grundkörper zur Anbindung des Bügels notwendig. Dies ermöglicht eine gewichtsreduzierte Ausgestaltung des Radträgers.

Eine weitere Ausführungsform der Erfindung sieht vor, dass der Bügel wenigstens einen ersten Schenkel und einen angewinkelt von dem ersten Schenkel ausgehenden zweiten Schenkel aufweist, wobei der Haltevorsprung beabstandet von dem zweiten Schenkel von dem ersten Schenkel ausgeht. Der Bügel ist insoweit grundsätzlich im Wesentlichen L-förmig ausgestaltet und weist hierzu den ersten Schenkel und den zweiten Schenkel auf. Die beiden Schenkel gehen unmittelbar voneinander aus und sind bevorzugt einstückig und/oder materialeinheitlich ausgestaltet.

Beispielsweise gehen die beiden Schenkel, also der erste Schenkel und der zweite Schenkel, jeweils endseitig ineinander über. Hierbei stehen die beiden Schenkel unter einem Winkel aufeinander, welcher größer als 0° und kleiner als 180° ist. Beispielsweise beträgt der Winkel mindestens 45° und höchstens 135°, mindestens 60° und höchstens 120°, mindestens 75° und höchstens 105°, mindestens 80° und höchstens 100°, mindestens 85° und höchstens 95° oder in etwa oder genau 90°.

Der Haltevorsprung geht analog zu dem zweiten Schenkel von dem ersten Schenkel aus, ist jedoch von dem zweiten Schenkel beabstandet angeordnet. Beispielsweise verläuft der Haltevorsprung parallel oder zumindest näherungsweise parallel zu dem zweiten Schenkel. Bevorzugt liegt der Haltevorsprung in etwa mittig an dem ersten Schenkel vor. Eine solche Ausgestaltung des Bügels ist zum einen einfach herstellbar und zum anderen ohne weiteres an dem Grundkörper beziehungsweise dem Spurhebel zu montieren.

Eine besonders bevorzugte Ausgestaltung der Erfindung sieht vor, dass der Haltevorsprung ein freies Ende aufweist und in Richtung des freien Endes auf den Spurhebel zu verläuft, sodass im Schnitt gesehen eine die Verliersicherung mit ausbildende Haltevertiefung in dem Haltevorsprung ausgebildet ist. Der Haltevorsprung weist auf seinem dem ersten Schenkel abgewandten Ende das freie Ende auf, welches vorzugsweise beabstandet von dem Grundkörper vorliegt. Der Haltevorsprung verläuft in Richtung seines freien Endes auf den Spurhebel zu, beispielsweise durch eine entsprechende Krümmung des Haltevorsprungs oder aufgrund einer Verdickung des Haltevorsprungs.

Insoweit liegt zwischen dem ersten Schenkel und dem freien Ende des Haltevorsprungs eine Haltevertiefung in dem Haltevorsprung vor, welche die Verliersicherung mit ausbildet und einer Aufnahme eines Bereichs der Spurstange im Falle eines Lösens der Spurstange von dem Spurhebel dient. Zusätzlich zu dem Verlauf des Haltevorsprungs auf den Spurhebel zu in Richtung des freien Endes kann es vorgesehen sein, dass der Haltevorsprung auch in gegenüberliegende Richtung auf den Spurhebel zu verläuft, beispielsweise aufgrund einer entsprechenden Biegung des Haltevorsprungs oder einer Verdickung.

In diesem Fall liegt die Haltevertiefung zwischen zwei derartigen Krümmungen beziehungsweise Verdickungen vor, sodass der Haltevorsprung in wenigstens einer Richtung symmetrisch oder zumindest nahezu symmetrisch ist, beispielsweise bezüglich einer den Haltevorsprung zwischen dem ersten Schenkel und dem freien Ende schneidenden Ebene. Die Ebene liegt insoweit beabstandet von dem ersten Schenkel des Bügels vor. Die beschriebene Ausgestaltung des Radträgers stellt ein besonders zuverlässiges Auffangen der Spurstange im Falle eines Defekts des Spurstangengelenks sicher.

Schließlich kann im Rahmen einer weiteren bevorzugten Ausgestaltung der Erfindung vorgesehen sein, dass ein Abstand zwischen dem bestimmungsgemäß montierten Spurstangengelenk und dem Haltevorsprung in einer bestimmten Richtung kleiner ist als Abmessungen eines ein Lagerelement der Spurstange aufnehmenden Lagergehäuses und/oder des Lagerelements in derselben Richtung. Das Spurstangengelenk weist nach seiner bestimmungsgemäßen Montage einen bestimmten Abstand zu dem Haltevorsprung auf, insbesondere in axialer Richtung bezüglich der Drehachse des Spurstangengelenks. Das Lagergehäuse beziehungsweise das Lagerelement weisen in derselben Richtung Abmessungen auf, welche größer sind als der Abstand, insbesondere deutlich größer. Beispielsweise beträgt der Abstand höchstens 75 %, höchstens 50 %, höchstens 25 % oder höchstens 10 % der Abmessungen. Auf diese Art und Weise wird ein defektbedingtes Entfernen der Spurstange von dem Spurhebel zuverlässig verhindert.

Die Erfindung betrifft weiterhin ein Verfahren zum Montieren eines Radträgers für ein Kraftfahrzeug, insbesondere eines Radträgers gemäß den Ausführungen im Rahmen dieser Beschreibung, wobei der Radträger über einen Grundkörper und einen von dem Grundkörper ausgehenden Spurhebel zur Anbindung einer Spurstange über ein Spurstangengelenk verfügt, wobei das Spurstangengelenk auf einer Seite des Spurhebels mittels eines Bolzens an einer Anbindungsstelle an dem Spurhebel befestigt wird. Dabei ist vorgesehen, dass an dem Radträger ein die Anbindungsstelle übergreifender Haltevorsprung zur Bildung einer Verliersicherung für die Spurstange angeordnet wird.

Auf die Vorteile einer derartigen Ausgestaltung des Radträgers beziehungsweise einer derartigen Vorgehensweise wurde bereits hingewiesen. Sowohl der Radträger als auch das Verfahren zu seinem Montieren können gemäß den Ausführungen im Rahmen dieser Beschreibung weitergebildet sein, sodass insoweit auf diese verwiesen wird.

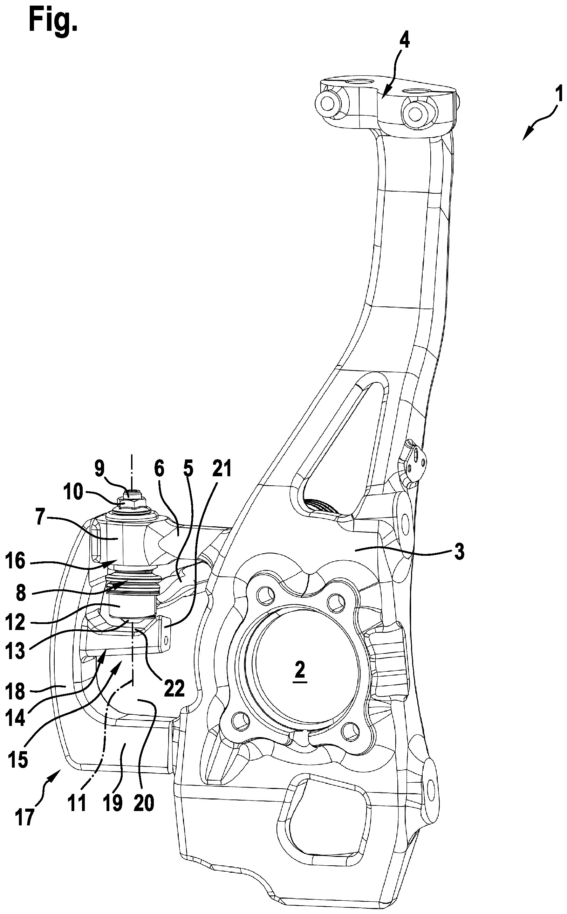

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Radträgers für ein Kraftfahrzeug, mit einer Verliersicherung für eine Spurstange.

Die Figur zeigt einen Radträger 1 für ein Kraftfahrzeug, über welchen ein Rad des Kraftfahrzeugs an eine Karosserie des Kraftfahrzeugs anbindbar ist. Beispielsweise ist der Radträger 1 hierzu über wenigstens einen Lenker an die Karosserie angebunden, wohingegen über ein Radlager das Rad beziehungsweise eine Radnabe, an welcher das Rad befestigbar ist, drehbar an dem Radträger 1 gelagert ist. Zur Aufnahme des Radlagers verfügt der Radträger 1 über eine Radlageraufnahme 2, die in einem Grundkörper 3 des Radträgers 1 ausgebildet ist. Die Radlageraufnahme 2 ist vorzugsweise, wie hier dargestellt, randgeschlossen ausgeführt. Der Grundkörper 3 weist eine Schnittstelle 4 zur Anbindung eines Dämpfers, einer Federung oder eines Federbeins auf.

Zur Anbindung einer Spurstange 5 geht von dem Grundkörper 3 ein Spurhebel 6 aus, der insoweit in Form eines Vorsprungs an dem Grundkörper 3 vorliegt. An dem Spurhebel 6 ist ein Lagerauge 7 zur Anbindung der Spurstange 5 ausgebildet. Die Anbindung der Spurstange 5 an den Spurhebel 6 erfolgt mittels eines Spurstangengelenks 8, welches mit Hilfe eines Bolzens 9 und einer Mutter 10 an dem Spurhebel 6 befestigt ist. Hierzu durchgreift der Bolzen 9 eine hierzu vorgesehene Ausnehmung des Lagerauges 7. Mithilfe des Spurstangengelenks 8 ist die Spurstange 5 um eine Drehachse 11 bezüglich des Spurhebels 6 drehbar gelagert. Das Spurstangengelenk 8 weist ein Lagergehäuse 12 auf, in welchem ein hier nicht erkennbares Lagerelement der Spurstange 5 drehbar gelagert ist. Das Lagerelement liegt beispielsweise in Form einer Kugel oder dergleichen vor, sodass das Spurstangengelenk 8 als Kugelgelenk ausgestaltet ist.

Das Lagergehäuse 12 ist einerseits mittels eines Lagerdeckels 13 verschlossen, andererseits ist es beispielsweise verrollt. In jedem Fall ist das Lagergehäuse 12 derart ausgestaltet, dass das Lagerelement während eines bestimmungsgemäßen Betriebs nicht aus ihm herausgelangen kann. Um einen Verlust der Radführung des Kraftfahrzeugs bei einem ungewollten Herausgelangen des Lagerelements aus dem Lagergehäuse 12, also bei einem Defekt des Spurstangengelenks 8, zu vermeiden, ist ein Haltevorsprung 14 vorgesehen, der eine Verliersicherung 15 für die Spurstange 5 ausbildet. Hierzu übergreift der Haltevorsprung 14 eine Anbindungsstelle 16, an welcher das Spurstangengelenk 8 mittels des Bolzens 9 an dem Spurhebel 6 befestigt ist.

Beispielsweise liegt die Anbindungsstelle 16 auf der Drehachse 11. Der Haltevorsprung 14 geht von einem Bügel 17 aus, der in dem hier dargestellten Ausführungsbeispiel einerseits an dem Grundkörper 3 und andererseits an dem Spurhebel 6 befestigt ist. Der Bügel 17 weist einen ersten Schenkel 18 und einen zweiten Schenkel 19 auf, welche gegeneinander angewinkelt sind. Der zweite Schenkel 19 geht hierbei von dem ersten Schenkel 18 aus und erstreckt sich ausgehend von diesem in Richtung des Grundkörpers 3. Vorzugsweise liegt der zweite Schenkel 19 an dem Grundkörper 3 an und ist zusätzlich an diesem befestigt, beispielsweise mittels einer Schraubbefestigung.

Der erste Schenkel 18 ist hingegen durchgehend von dem Grundkörper 3 beabstandet angeordnet. Er ist jedoch an dem Spurhebel 6 befestigt, genauer gesagt greift er an dem Lagerauge 7 auf dessen dem Grundkörper 3 abgewandten Seite an. Es ist erkennbar, dass die beiden Schenkel 18 und 19 zusammen mit dem Grundkörper 3 und dem Spurhebel 6 eine Ausnehmung 20 randgeschlossen begrenzen. Dies ermöglicht eine gewichtsgünstige Ausgestaltung des Radträgers 1. Der Haltevorsprung 14 weist auf seiner dem ersten Schenkel 18 abgewandten Seite ein freies Ende 21 auf. In Richtung dieses freien Endes 21 läuft es auf den Spurhebel 6 zu, nämlich indem eine Verdickung des Haltevorsprungs 14 ausgebildet ist. Diese Verdickung begrenzt eine Haltevertiefung 22, die die Verliersicherung 15 mit ausbildet.

Bei einer Montage des Radträgers 1 wird bei entfernt von dem Grundkörper 3 vorliegenden Bügel 17 die Spurstange 5 mithilfe des Spurstangengelenks 8 an dem Spurhebel 6 angelenkt. Erst anschließend wird der Bügel 17 montiert und hierbei einerseits an dem Grundkörper 3 und andererseits an dem Spurhebel 6 befestigt. Hierdurch wird der Haltevorsprung 14 in Überdeckung mit der Anbindungsstelle 16 angeordnet, sodass er die Verliersicherung 15 für die Spurstange 5 ausbildet. Hierzu ist vorzugsweise der Haltevorsprung 14 derart angeordnet, dass er von dem Spurstangengelenk 8 einen (minimalen) Abstand aufweist, der kleiner ist als die Abmessungen des Lagergehäuses 12 und/oder des Lagerelements in axialer Richtung bezüglich der Drehachse 11. Aufgrund einer solchen Anordnung des Haltevorsprungs 14 wird ein Herausrutschen des Lagerelements aus dem Lagergehäuse 12 zuverlässig verhindert.

## Patentansprüche

1. Radträger (1) für ein Kraftfahrzeug, mit einem Grundkörper (3) und einem von dem Grundkörper (3) ausgehenden Spurhebel (6) zur Anbindung einer Spurstange (5) über ein Spurstangengelenk (8), wobei das Spurstangengelenk (8) auf einer Seite des Spurhebels (6) mittels eines Bolzens (9) an einer Anbindungsstelle (16) an dem Spurhebel (6) befestigt oder befestigbar ist, **dadurch gekennzeichnet, dass** an dem Radträger (1) ein die Anbindungsstelle (16) übergreifender Haltevorsprung (14) eine Verliersicherung (15) für die Spurstange (5) bildet.

2. Radträger nach Anspruch 1, **dadurch gekennzeichnet, dass** der Haltevorsprung (14) beabstandet von dem Spurhebel (6) und/oder dem Grundkörper (3) angeordnet ist.

3. Radträger nach einem der vorhergehenden Ansprüche, **dadurch gekennzeichnet, dass** der Haltevorsprung (14) lösbar befestigt ist.

4. Radträger nach einem der vorhergehenden Ansprüche, **dadurch gekennzeichnet, dass** der Haltevorsprung (14) von dem Grundkörper (3) oder einem Bügel (17) ausgeht, der einerseits oder beidseitig an dem Grundkörper (3) und/oder dem Spurhebel (6) befestigt ist.

5. Radträger nach Anspruch 4, **dadurch gekennzeichnet, dass** aufgrund der beidseitigen Befestigung des Bügels (17) im Schnitt eine randgeschlossene Ausnehmung (20) ausgebildet ist, die von dem Grundkörper (3), dem Spurhebel (6) und dem Bügel (17) gemeinsam begrenzt ist.

6. Radträger nach Anspruch 4 oder 5, **dadurch gekennzeichnet, dass** der Spurhebel (6) ein Lagerauge (7) zur Anbindung des Spurstangengelenks (8) aufweist, wobei der Bügel (17) auf der dem Grundkörper (3) abgewandten Seite an dem Lagerauge (7) befestigt ist.

7. Radträger nach einem der Ansprüche 4 bis 6, **dadurch gekennzeichnet, dass** der Bügel (17) wenigstens einen ersten Schenkel (18) und einen angewinkelt von dem ersten Schenkel (18) ausgehenden zweiten Schenkel (19) aufweist, wobei der Haltevorsprung (14) beabstandet von dem zweiten Schenkel (19) von dem ersten Schenkel (18) ausgeht.

8. Radträger nach einem der vorhergehenden Ansprüche, **dadurch gekennzeichnet, dass** der Haltevorsprung (14) ein freies Ende (21) aufweist und in Richtung des freien Endes (21) auf den Spurhebel (6) zu verläuft, sodass im Schnitt gesehen eine die Verliersicherung (15) mit ausbildende Haltevertiefung (22) in dem Haltevorsprung (14) ausgebildet ist.

9. Radträger nach einem der vorhergehenden Ansprüche, **dadurch gekennzeichnet, dass** ein Abstand zwischen dem bestimmungsgemäß montierten Spurstangengelenk (8) und dem Haltevorsprung (14) in einer bestimmten Richtung kleiner ist als Abmessungen eines ein Lagerelement der Spurstange (5) aufnehmenden Lagergehäuses (12) und/oder des Lagerelements in derselben Richtung.

10. Verfahren zum Montieren eines Radträgers (1) für ein Kraftfahrzeug, insbesondere eines Radträgers (1) nach einem oder mehreren der vorhergehenden Ansprüche, wobei der Radträger (1) über einen Grundkörper (3) und einen von dem Grundkörper (3) ausgehenden Spurhebel (6) zur Anbindung einer Spurstange (5) über ein Spurstangengelenk (8) verfügt, wobei das Spurstangengelenk (8) auf einer Seite des Spurhebels (6) mittels eines Bolzens (9) an einer Anbindungsstelle (16) an dem Spurhebel (6) befestigt wird, **dadurch gekennzeichnet, dass** an dem Radträger (1) ein die Anbindungsstelle (16) übergreifender Haltevorsprung (14) zur Bildung einer Verliersicherung (15) für die Spurstange (5) angeordnet wird.

## Claims

1. Wheel support (1) for a motor vehicle, having a main body (3) and a track lever (6), originating from the main body (3), for connecting a track rod (5) via a track-rod-joint (8), wherein the track-rod-joint (8) is fastened or can be fastened to the track lever (6) on one side of the track lever (6) by means of a bolt (9) to a connecting point (16), **characterised in that** on the wheel support (1), a retaining protrusion (14) overlapping the connecting point (16) forms a loss-prevention-system (15) for the track rod (5).

2. Wheel support according to claim 1, **characterised in that** the retaining protrusion (14) is arranged spaced from the track lever (6) and/or from the main body (3).

3. Wheel support according to any of the preceding claims, **characterised in that** the retaining protrusion (14) is detachably fastened.

4. Wheel support according to any of the preceding claims, **characterised in that** the retaining protrusion (14) originates from the main body (3) or a bracket (17) which is fastened on one side or on both sides to the main body (3) and/or to the track lever (6).

5. Wheel support according to claim 4, **characterised in that** for reasons of the two-sided fastening of the bracket (17) on average a rim-locked recess (20) is formed which is limited by the main body (3), the track lever (6) and the bracket (17) together.

6. Wheel support according to claim 4 or 5, **characterised in that** the track lever (6) has a bearing eye (7) for connecting the track-rod-joint (8), wherein the bracket (17) is fastened to the bearing eye (7) on the side facing away from the main body (3).

7. Wheel support according to any of claims 4 to 6, **characterised in that** the bracket (17) has at least a first leg (18) and a second leg (19) originating from the first leg (18) at an angle, wherein the retaining protrusion (14) originates from the first leg (18) so as to be spaced from the second leg (19).

8. Wheel support according to any of the preceding claims, **characterised in that** the retaining protrusion (14) has a free end (21) and runs in the direction of the free end (21) towards the track lever (6), such that seen on average a retaining depression (22), which contributes to the formation of the loss-prevention-system (15), is formed in the retaining protrusion (14).

9. Wheel support according to any of the preceding claims, **characterised in that** a spacing between the track-rod-joint (8) which has been installed correctly and the retaining protrusion (14) is, in a specific direction, smaller than dimensions of a bearing housing (12) accommodating a bearing element of the track rod (5) and/or of the bearing element in the same direction.

10. Method for installing a wheel support (1) for a motor vehicle, particularly a wheel support (1) according to one or more of the preceding claims, wherein the wheel support (1) has a main body (3) and a track lever (6) originating from the main body (3) for connecting a track rod (5) via a track-rod joint (8), wherein the track-rod-joint (8) is fastened on a side of the track lever (6) by means of a bolt (9) to a connecting point (16) on the track lever (6), **characterised in that** on the wheel support (1) is arranged a retaining protrusion (14) which overlaps the connecting point (16) to form a loss-prevention-system (15) for the track rod (5).

## Revendications

1. Support de roue (1) pour un véhicule automobile, avec un corps de base (3) et un levier d'accouplement (6) émanant du corps de base (3) pour relier une barre d'accouplement (5) par l'intermédiaire d'une articulation de barre d'accouplement (8), dans lequel l'articulation de barre d'accouplement (8) est fixée ou peut être fixée sur un côté du levier d'accouplement (6) au moyen d'un boulon (9) en un point de liaison (16) sur le levier d'accouplement (6), **caractérisé en ce que** sur le support de roue (1), une saillie de maintien (14) recouvrant le point de liaison (16) forme une fixation de retenue (15) pour la barre d'accouplement (5).

2. Support de roue selon la revendication 1, **caractérisé en ce que** la saillie de maintien (14) est disposée à distance du levier d'accouplement (6) et/ou du corps de base (3).

3. Support de roue selon l'une quelconque des revendications précédentes, **caractérisé en ce que** la saillie de maintien (14) est fixée de manière amovible.

4. Support de roue selon l'une quelconque des revendications précédentes, **caractérisé en ce que** la saillie de maintien (14) émane du corps de base (3) ou d'un étrier (17), qui est fixé d'un côté ou des deux côtés au corps de base (3) et/ou au levier d'accouplement (6).

5. Support de roue selon la revendication 4, **caractérisé en ce qu'**en raison de la fixation des deux côtés de l'étrier (17), un évidement (20) fermé sur le bord est réalisé en coupe, qui est délimité conjointement par le corps de base (3), le levier d'accouplement (6) et l'étrier (17).

6. Support de roue selon la revendication 4 ou 5, **caractérisé en ce que** le levier d'accouplement (6) présente un œillet de palier (7) pour relier l'articulation de barre d'accouplement (8), dans lequel l'étrier (17) est fixé à l'œillet de palier (7) sur le côté opposé au corps de base (3).

7. Support de roue selon l'une quelconque des revendications 4 à 6, **caractérisé en ce que** l'étrier (17) présente au moins une première branche (18) et une seconde branche (19) émanant de la première branche (18) en formant un angle, dans lequel la saillie de maintien (14) émane de la première branche (18) à distance de la seconde branche (19).

8. Support de roue selon l'une quelconque des revendications précédentes, **caractérisé en ce que** la saillie de maintien (14) présente une extrémité libre (21) et s'étend en direction de l'extrémité libre (21) sur le levier d'accouplement (6), de sorte que, vu en coupe, un renfoncement de maintien (22) réalisant la fixation de retenue (15) est réalisé dans la saillie de maintien (14).

9. Support de roue selon l'une quelconque des revendications précédentes, **caractérisé en ce qu'**une distance entre l'articulation de barre d'accouplement (8) montée conformément et la saillie de maintien (14) dans une certaine direction est inférieure aux dimensions d'un logement de palier (12) recevant un élément de palier de la barre d'accouplement (5) et/ou de l'élément de palier dans la même direction.

10. Procédé de montage d'un support de roue (1) pour un véhicule automobile, en particulier un support de roue (1) selon une ou plusieurs des revendications précédentes, dans lequel le support de roue (1) dispose d'un corps de base (3) et un levier d'accouplement (6) émanant du corps de base (3) pour relier une barre d'accouplement (5) par l'intermédiaire d'une articulation de barre d'accouplement (8), dans lequel l'articulation de barre d'accouplement (8) est fixée sur un côté du levier d'accouplement (6) au moyen d'un boulon (9) en un point de liaison (16) sur le levier d'accouplement (6), **caractérisé en ce qu'**une saillie de maintien (14) recouvrant le point de liaison (16) est disposée sur le support de roue (1) pour former une fixation de retenue (15) pour la barre d'accouplement (5).
